# EUROPÄISCHE PATENTANMELDUNG

(11) **EP 0 866 236 A1**
(43) Veröffentlichungstag der Anmeldung: **23.09.1998**
(21) Anmeldenummer: 98103432.5
(22) Anmeldetag: 27.02.1998
(51) Int. Cl.: F16D 65/16

(54) **Feststellbremsvorrichtung an einem Bremssattel einer hydraulisch betätigbaren Betriebsbremse**

(30) Priorität: 19.03.1997 DE 19711382
(71) Anmelder: Daimler-Benz Aktiengesellschaft, 70567 Stuttgart (DE)
(72) Erfinder: Fleischer, Horst, 74348 Lauffen (DE)

(57) **Zusammenfassung**

Die Erfindung betrifft eine Feststellbremsvorrichtung an einem Bremssattel (1) einer hydraulisch betätigbaren Betriebsbremse, bei der die Feststellbremsvorrichtung einen elektrischen Antrieb umfaßt, der auf mindestens einen Kolben (5) der Betriebsbremse wirkt. Zwischen dem Motor (41) des elektrischen Antriebs und wenigstens einem Kolben der hydraulischen Betriebsbremse ist mindestens ein bei Betätigung der Feststellbremse ladbarer mechanischer Federspeicher (51) mit mindestens einem integrierten Federelement angeordnet. Dabei spannt das Federelement den Kolben in Richtung auf die Bremsscheibe vor.

Mit der Erfindung wird eine elektromechanische Feststellbremsvorrichtung geschaffen, bei der die Bremsenklemmkraft nahezu unabhängig von thermischen Einflüssen im Bereich des Bremssattels ist.

## Beschreibung

Die Erfindung betrifft eine Feststellbremsvorrichtung an einem Bremssattel einer hydraulisch betätigbaren Betriebsbremse, bei der die Feststellbremsvorrichtung einen elektrischen Antrieb umfaßt, der auf mindestens einen Kolben der Betriebsbremse wirkt.

Eine derartige Feststellbremsvorrichtung ist aus der EP 0 729 871 A1 bekannt. Dort wird u.a. eine Schwimmsattelbremse beschrieben, die über eine hydraulische Betriebsbremse und eine elektromechanische Feststellbremse verfügt. Die Feststellbremse wirkt auf einen Kolben der hydraulischen Betriebsbremse. Hierzu ist am Bremssattel ein elektrischer Antrieb angeordnet. Er besteht aus einem Elektromotor, einem Schneckengetriebe und einem Schraubgetriebe. Der Elektromotor treibt über das Schneckengetriebe eine Gewindespindel an, die koaxial in einer zentralen Bohrung des Hydraulikkolbens liegt. In der Bohrung stützt sie sich über eine verdrehsteife Mutter am Kolben ab. Bei einer Betätigung der Feststellbremse schraubt der elektrische Antrieb die Mutter gegen den Hydraulikkolben und diesen wiederum gegen den benachbarten Bremsbelag.

Im Gegensatz zur konventionell mittels eines Seilzugs betätigten Feststellbremse hat diese Konstruktion eine große Steifigkeit. Der lange, elastische Seilzug herkömmlicher Feststellbremsen wird durch ein relativ starres Getriebe ersetzt. Daraus ergibt sich bei der zuvor beschriebenen elektromechanischen Feststellbremse, zumindest nach einer Fahrt mit stark belasteter bzw. heißer Betriebsbremse ein Nachlassen der Bremsenklemmkraft nach dem Abstellen des Kraftfahrzeugs. Das Abkühlen der Bremsanlage erzeugt - u.a. durch das Schrumpfen der Bremsscheibe in axialer Richtung - ein das Nachlassen der Bremsenklemmkraft verursachendes Lüftspiel zwischen den Bremsbelägen und der Bremsscheibe.

Aus der US-PS 4,784,244 ist eine elektrisch betätigte Betriebsbremse bekannt. Ein Elektromotor bewegt über ein Spindel- und Keilrollengetriebe den Bremskolben. Parallel zum Elektromotor ist eine Schraubenfeder zur Antriebsverstärkung angeordnet. Die Betriebsbremse hat ähnliche Nachteile wie die zuvor beschriebene Feststellbremse.

Der Erfindung liegt daher das Problem zugrunde, eine elektromechanische Feststellbremsvorrichtung zu schaffen, bei der die Bremsenklemmkraft nahezu unabhängig von thermischen Einflüssen im Bereich des Bremssattels ist. Dabei soll der Aufbau der Vorrichtung wenig Bauraum beanspruchen und nahezu wartungsfrei sein.

Das Problem wird mit den Merkmalen des Hauptanspruchs gelöst. Zwischen dem Motor des elektrischen Antriebs und wenigstens einem Kolben der hydraulischen Betriebsbremse ist mindestens ein bei Betätigung der Feststellbremse ladbarer mechanischer Federspeicher mit mindestens einem integrierten Federelement angeordnet. Dabei spannt das Federelement den Kolben in Richtung auf die Bremsscheibe vor.

Bei Schwimmsattel- und Pendelsattelbremsen wird in der Regel nur ein elektromechanischer, mit Federspeicher versehener Antrieb benötigt. Festsattelbremsen benötigen mindestens zwei einander gegenüberliegende Feststellbremsvorrichtungen.

Ein in einer Feststellbremsvorrichtung integrierter Federspeicher kann direkt oder indirekt den Hydraulikkolben der Betriebsbremse gegen die Bremsscheibe pressen. Für die direkte Belastung des Kolbens kann jeder thermisch belastbare Federspeicher verwendet werden, der seine gespeicherte Federenergie über einen Linearhub abgeben kann. Als Federelemente können beispielsweise je nach erforderlicher Federrate Schraubenfedern, Blattfedern oder Tellerfedern eingesetzt werden. Auch eine Kombination gleich- oder verschiedenartiger Federn ist denkbar.

Ein Torsionsfederspeicher kann nur indirekt auf den Hydraulikkolben wirken. Er benötigt mindestens ein Getriebe oder einen Mechanismus, der die Torsion des Federspeichers in eine lineare Bewegung umwandelt. Die Umwandlung kann beispielsweise mit Hilfe eines Gewindespindelgetriebes, eines Exzentergetriebes, eines Geradschubkurbelgetriebes oder dergleichen erfolgen.

Ein Torsionsfederspeicher enthält mindestens ein Torsionsfederelement. Dies kann u.a. eine Schraubenfeder, eine Spiralfeder oder ein Torsionsstab sein. Beispielsweise kann es bei einen Antrieb mit einem Schneckengetriebe, vgl. EP 0 739 871 A1, auch ein Teil des Schneckenrades sein. Hierzu ist der Zahnkranz des Schneckenrades mit seiner Nabe über radiale, speichenartig angeordnete Blattfedern verbunden, so daß sich die Nabe gegenüber dem Zahnkranz um einige Winkelgrade verdrehen kann.

Weitere Einzelheiten der Erfindung ergeben sich aus den nicht oder nur teilweise zitierten Unteransprüchen und der nachfolgenden Beschreibung mehrerer schematisch dargestellter Ausfüh rungsformen:
- Figur 1:: Feststellbremsvorrichtung mit zweistufigem Schraubradgetriebe und direkt wirkendem Federspeicher;
- Figur 2:: Feststellbremsvorrichtung mit einem kombinierten Schraubrad- und Exzentergetriebe sowie einem direkt wirkenden Federspeicher;
- Figur 3:: Feststellbremsvorrichtung mit zweistufigem Schraubradgetriebe und indirekt wirkendem Federspeicher.

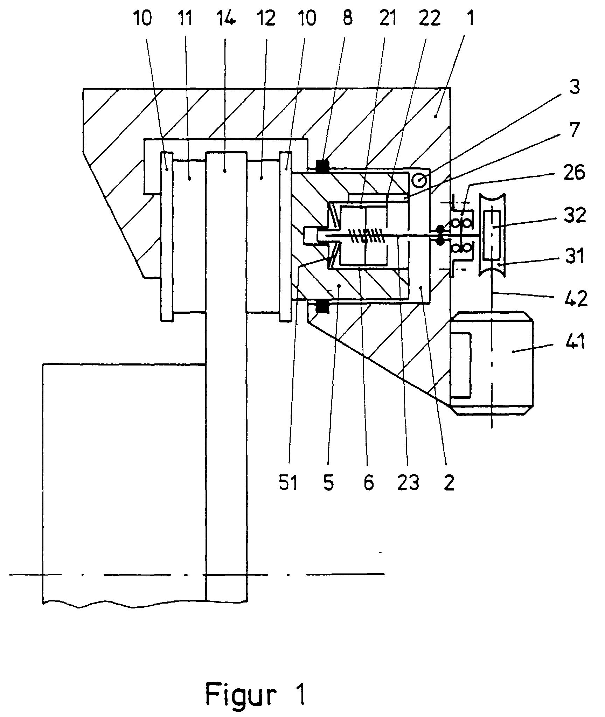

Figur 1 bis 3 zeigen vereinfacht eine Schwimmsattelbremse mit verschieden ausgeführten Feststellbremsvorrichtungen.

Die Schwimmsattelbremse umgreift mit einer Bremssattelfaust (1) eine Bremsscheibe (14). Im rechten Bereich der Bremssattelfaust (1) sitzt in einer Kolbenkammer (2) ein Kolben (5), der bei einer Betätigung der Betriebsbremse die Bremsbeläge (11, 12) hydraulisch gegen die Bremsscheibe (14) preßt. Die Bremsflüssigkeit strömt hierzu über die Bohrung (3) in die Kolbenkammer (2). Zwischen dem rechten Bremsbelag (12) und dem Kolben (5) sowie zwischen dem linken Bremsbelag (11) und der Bremssattelfaust (1) liegt je eine Rückenplatte (10).

Am Bremssattel der Kombinationsbremse in Figur 1 ist eine Feststellbremsvorrichtung angeordnet, die den Kolben (5) mit Hilfe eines zweistufigen Getriebes (31, 32) und (21, 23) eines Elektromotors (41) verstellt. Der am Bremssattel befestigte Elektromotor (41) treibt ein Schneckengetriebe (31, 32) an, das über einen Gewindespindeltrieb (21, 23) den Kolben (5) in axialer Richtung verstellt.

Dazu sitzt in einer zentralen Bohrung (6) des Kolbens (5) eine Gewindehülse (21) mit einem Innengewinde, in das eine Gewindespindel (23) eingreift. Die Gewindehülse (21) stützt sich im Kolben (5) über ein Tellerfederpaket (51) am Boden der Kolbenbohrung (6) ab. Die im Bereich des Tellerfederpakethubs axial verschiebbare Gewindehülse (21) sitzt verdrehsicher im Kolben (5). Die Verdrehsicherung bildet beispielsweise eine an der Gewindehülse (21) angeordnete Nase (22), die in eine im Kolben (5) eingefräste Nut (7) eingreift.

Der Kolben (5) wird über einen Kolbendichtring (8) und eine nicht dargestellte Staubkappe in der Regel verdrehsicher in der Bremssattelfaust (1) gehalten.

Das rechte Ende der Gewindespindel (23) ist aus der Bremssattelfaust (1) herausgeführt. Auf ihrem freien Ende ist ein Schneckenrad (31) angeordnet. Zwischen der Bremssattelfaust (1) und dem Schneckenrad (31) sitzt eine Wälzlagerung (26), die die Gewindespindel (23) zumindest axial lagert.

Das Schneckenrad (31) kämmt mit einer Schnecke (32), die auf der verlängerten Welle (42) des Elektromotors (41) sitzt.

Im Betriebszustand des Kraftfahrzeugs und bei unbetätigter Betriebsbremse befindet sich die Gewindehülse (21) in einer hinteren Position, so daß das Tellerfederpaket (51) unbelastet ist. Der Kolben (5) kann sich bei einer hydraulischen Betätigung der Betriebsbremse - unbeeinträchtigt durch die Teile der Feststellbremsvorrichtung - zwischen seiner Arbeits- und Ruheposition bewegen. Nach einem Anhalten zum Abstellen des Kraftfahrzeugs kann die Feststellbremsvorrichtung durch ein Bestromen des Elektromotors (41) betätigt werden. Der Elektromotor (41) dreht über das selbsthemmende Schneckengetriebe (31, 32) die Gewindespindel (23). Letztere schraubt die Gewindehülse (21) beispielsweise solange nach links, bis der Elektromotor (41) beim Erreichen einer steuerungstechnisch vorgegebenen Leistungsaufnahme abschaltet. Die Gewindespindel (23) legt hierbei das Tellerfederpaket (51) nicht nur am Boden der Kolbenbohrung (6) an, sondern spannt das Tellerfederpaket (51) beispielsweise um mehrere Zehntel Millimeter vor.

Nach dem Abkühlen der Bremsanlage, also nach einem axialen Schrumpfen der Bremsscheibe (14), der Bremsbeläge (11, 12) und der Rückenplatten (10), wird der Kolben (5) durch die Wirkung des Federspeichers (51) nachgeführt, so daß die Bremswirkung der Feststellbremse nahezu unverändert bleibt.

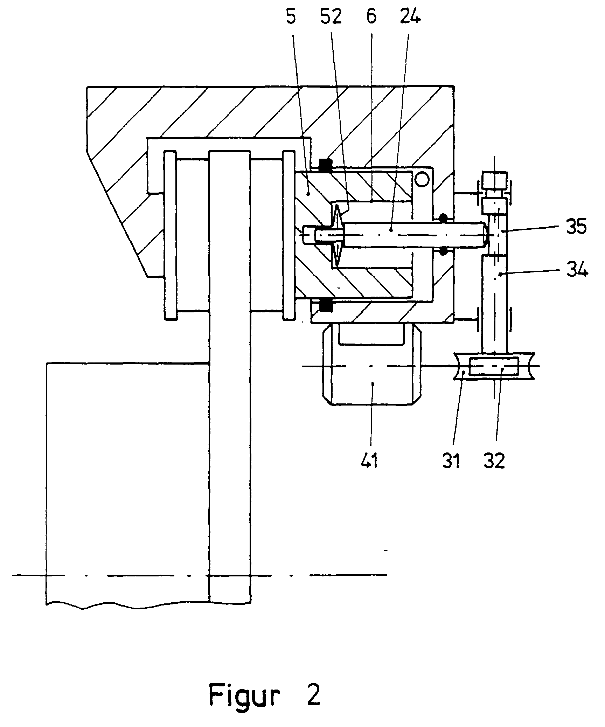

Eine vergleichbare Lösung mit einem direkt wirkenden Federspeicher (52) ist in Figur 2 dargestellt. Der Elektromotor (41) ist hier gegenüber Figur 1 um 90° versetzt angeordnet. Das durch ihn angetriebene Schneckengetriebe (31, 32) verdreht eine Exzenterwelle (34), deren Exzenter (35) einen Stößel (24) koaxial zum Kolben (5) bewegt. Der Stößel (24) belastet bei Betätigung der Feststellbremse über eine Tellerfedersäule (52) den Kolben (5). Bei nicht betätigter Feststellbremse liegen die Tellerfedern der Tellerfedersäule (52) gering belastet oder vollständig entlastet zwischen der Kolbenbohrung (6) und dem Stößel (24).

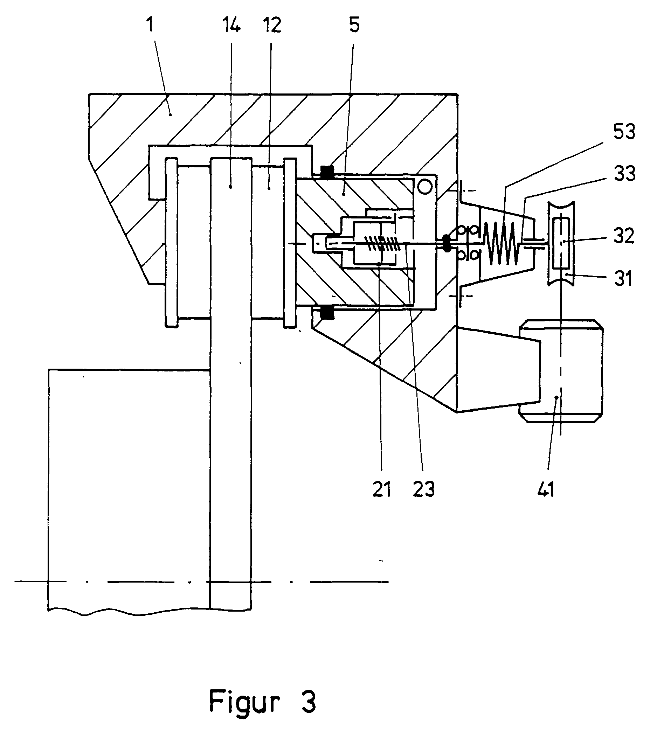

In der Figur 3 ist eine Variante dargestellt, bei der der Federspeicher (53) zwischen zwei Getrieben (31, 32) und (21, 23) angeordnet ist. Der Elektromotor (41) treibt über das Schneckengetriebe (31, 32) die Gewindespindel (23) an. Zwischen der Schneckenradwelle (33) und der Gewindespindel (23) ist beispielsweise eine Schraubenfeder (53) als Torsionsfederspeicher angeordnet. Die Gewindespindel (23) stützt sich wie in Figur 1 am Kolben (5) über eine Gewindehülse (21) ab.

Beim Betätigen der Feststellbremsvorrichtung schraubt der Getriebezug die Gewindespindel (23) bzw. den Kolben (5) gegen den Bremsbelag (12). Der Schwimmsattel (1) umgreift zangenartig die Scheibenbremse (14). Nach dem Klemmen der Bremse wird die Schneckenradwelle (33) gegenüber der Gewindespindel (23) durch ein Weiterdrehen um einen ggf. steuerungstechnisch einstellbaren Winkel im Federspeicher (53) tordiert. In der Folge dreht sich bei abgeschaltetem Elektromotor (41) und bei blockiertem Schneckengetriebe (31, 32) die Gewindespindel (23) beim axialen Schrumpfen der Bremsscheibe (14) soweit um ihre Längsachse, daß eine mindestens erforderliche Bremsenklemmkraft erhalten bleibt.

Für den Fall, daß der maximale Torsionswinkel unter 360° liegt, kann der Federspeicher (53) mit einer Kupplung überbrückt sein. Wenn die Kupplung beispielsweise 300° Torsion zuläßt, treibt die Schneckenradwelle (33) die Gewindespindel (23) zum Schließen der Feststellbremsvorrichtung nach einer spannenden Verdrehung um 300° direkt an. Zum Lösen der Feststellbremse wird nach einer Rückdrehung um ca. 300° - nach einem teilweise Entspannen des Federspeichers (53) - die Gewindespindel (23) direkt angetrieben. Das hat den Vorteil, daß zum Lösen der Feststellbremse die Torsionsfeder (53) nicht erst in Gegenrichtung gespannt werden muß. Die Feststellbremse öffnet dadurch schneller.

Ein weiteres Lösungskonzept sieht vor, den Torsionsspeicher (53) aus Figur 3 in die Konstruktion aus Figur 2 zu integrieren. Der Federspeicher (53) wird dort zwischen der Schneckenradwelle (33) und der Exzenterwelle (34) angeordnet. Anstelle des Federspeichers (52) wird im Bereich des Kolbens (5) eine Rückhubmechanik für den Stößel (24) eingebaut.

### Bezugszeichenliste

- 1: Bremssattelfaust
- 2: Kolbenkammer
- 3: Bohrung
- 5: Kolben
- 6: Kolbenbohrung, zentral
- 7: Nut
- 8: Kolbendichtring
- 10: Rückenplatte
- 11, 12: Bremsbeläge, links, rechts
- 14: Bremsscheibe
- 21: Gewindehülse
- 22: Nase
- 23: Gewindespindel
- 24: Stößel
- 26: Wälzlagerung
- 31: Schneckenrad
- 32: Schnecke
- 33: Schneckenradwelle
- 34: Exzenterwelle
- 35: Exzenter
- 41: Elektromotor
- 42: Motorwelle
- 51: Tellerfederpaket, Federspeicher
- 52: Tellerfedersäule, Federspeicher
- 53: Schraubenfeder, Federspeicher (Torsion)

## Patentansprüche

1. Feststellbremsvorrichtung an einem Bremssattel einer hydraulisch betätigbaren Betriebsbremse, bei der die Feststellbremsvorrichtung einen elektrischen Antrieb umfaßt, der auf mindestens einen Kolben der Betriebsbremse wirkt, dadurch gekennzeichnet,
- daß zwischen dem Motor (41) des elektrischen Antriebs und dem Kolben (5) mindestens ein bei Betätigung der Feststellbremse ladbarer mechanischer Federspeicher (51; 52; 53) mit mindestens einem integrierten Federelement angeordnet ist, wobei das Federelement den Kolben (5) in Richtung auf die Bremsscheibe (14) vorspannt.

2. Feststellbremsvorrichtung gemäß Anspruch 1, dadurch gekennzeichnet, daß der Federspeicher (51; 52) im Kolben (5) angeordnet ist.

3. Feststellbremsvorrichtung gemäß Anspruch 2, dadurch gekennzeichnet, daß der Federspeicher (51; 52) einen linearen Hub hat.

4. Feststellbremsvorrichtung gemäß Anspruch 1, dadurch gekennzeichnet, daß der Federspeicher (53) mindestens ein Torsionsfederelement enthält.

5. Feststellbremsvorrichtung gemäß Anspruch 4, dadurch gekennzeichnet, daß der Federspeicher (53) auf ein Gewindespindel(21, 23) oder Exzentergetriebe (34, 35, 24) wirkt.
